# EUROPÄISCHE PATENTSCHRIFT

(11) **EP 0 339 201 B1**
(45) Veröffentlichungstag und Bekanntmachung des Hinweises auf die Patenterteilung: **04.01.1995**
(21) Anmeldenummer: 89102875.5
(22) Anmeldetag: 20.02.1989
(51) Int. Cl.: H04M 19/08, H04B 3/44

(54) **Schaltungsanordnung für die Stromversorgung von Endgeräten über eine Anschlussleitung mit digitaler Informationsübertragung**
Feeding circuit for terminals by a connection line with digital information transmission
Circuit d'alimentation de terminaux par une ligne de connexion pour la transmission numérique d'informations

(30) Priorität: 28.04.1988 DE 3814321
(43) Veröffentlichungstag der Anmeldung: 02.11.1989
(73) Patentinhaber: TELENORMA GMBH, 60326 Frankfurt am Main (DE)
(72) Erfinder: Friedrich, Klaus Georg, Dipl.-Ing., D-6368 Bad Vilbel (DE); Schulmeyer, Peter, Dipl.-Ing., D-6074 Langen (DE)

(56) Entgegenhaltungen:
- DE-A- 2 152 098
- DE-A- 2 651 537
- DE-A- 3 311 386
- DE-A- 3 635 514
- FR-A- 2 044 957

## Beschreibung

Die Erfindung betrifft eine Schaltungsanordnung für die Stromversorgung von Endgeräten über eine Anschlußleitung mit digitaler Informationsübertragung nach dem Oberbegriff des Patentanspruches 1.

Es ist bekannt, daß Endgeräte, welche mit Strom zu versorgende eigene Steuereinrichtungen besitzen von der Vermittlungsanlage aus über die Anschlußleitungen mit Strom versorgt werden können. Bei vieradrigen Anschlußleitungen wird in der Regel jeweils ein Adernpaar für den Anschluß eines Poles der Stromversorgung benutzt. Dabei ist es bekannt, die Stromversorgung und die Verbraucher jeweils an die Mittelabgriffe von Leitungsabschlußübertragern anzuschließen. Eine derartige, auch als Phantomspeisung bekannte Anordnung ist in der Fig. 1 der DE-AS 12 24 372 dargestellt, wo eine Steuereinrichtung für eine Wechselsprechanlage beschrieben ist.

Aus dem Dokument DE 33 11 386 A1 ist ein Verfahren zum Betreiben von Endgeräten eines digitalen Teilnehmeranschlusses bekannt. Dabei erfolgt die Stromversorgung von Endgeräten über zwei Doppeladern, worüber eine gerichtete Informationsübertragung stattfindet. Jede Doppelader ist auf beiden Seiten mit je einem übertrager abgeschlossen, wobei Mittelabgriffe vorgesehen sind. An diesen Mittelabgriffen ist an einer sogenannten Teilnehmerschnittstelle die Stromversorgungseinrichtung angeschlossen, und auf der Endgeräteseite steht eine Speisespannung an den Mittelabgriffen der Übertrager zur Verfügung. In dem vorgenannten Dokument ist nichts darüber ausgesagt, wie sich die Ströme auf den einzelnen Adern verteilen. Bei unterschiedlichen Strömen können die Teilwicklungen der übertrager eine Magnetisierung der Kerne bewirken, so daß eine Informationsübertragung beeinträchtigt wird.

Ein übertragungssystem, vorzugsweise für Bildfernsprechsignale ist aus der Deutschen Auslegeschrift 21 52 098 bekannt. Dort ist eine aus zwei Doppeladern bestehende Anschlußleitung vorgesehen, worüber eine gerichtete Übertragung von Niederfrequenzsignalen stattfindet. Zur Stromversorgung der in beiden Übertragungsrichtungen erforderlichen Leitungsverstärkern ist eine Fernspeisequelle vorgesehen. Die Einkopplung der Speisespannung erfolgt durch paralleles Anschalten eines jeden Pols der Versorgungsspannung an beide Adern jeweils einer der beiden Anschlußleitungen. Dabei ist es erforderlich, daß ein hoher Wechselstromwiderstand quer zur Übertragungsrichtung bei der Einspeisung des Gleichstroms in die Doppelleitung erzielt wird, damit eine Beeinträchtigung der Übertragungsqualität vermieden wird. Für die Stromeinspeisung auf die Anschlußleitungen zur Versorgung der Leitungsverstärker sind keine Übertrager mit Mittelabgriff vorgesehen, weshalb es nicht unbedingt erforderlich ist, daß die Ströme auf den einzelnen Adern vollkommen gleich sind.

Bei den auf diese Weise mit Gleichstrom durchflossenen Übertragern kommt es darauf an, daß keine Magnetisierung dieser Übertrager auftritt, damit die Informationsübertragung nicht zu stark dadurch gedämpft werden kann. Je nach Art der Informationsübertragung kann eine durch die Gleichstromdurchflutung verursachte Dämpfung einen mehr oder weniger großen Informationsverlust verursachen.

Deshalb ist es Aufgabe der Erfindung, eine Schaltungsanordnung vorzustellen, womit die Stromverteilung auf den einzelnen Anschlußadern so genau geregelt wird, daß eine digitale Informationsübertragung auch mit sehr hoher Bitrate verlustfrei möglich ist.

Für die Lösung dieser Aufgabe sind Merkmale vorgesehen, wie sie im Patentanspruch 1 angegeben sind.

Damit wird in vorteilhafter Weise erreicht, daß der Einfluß des über die Stromversorgung zur Verfügung gestellten Gleichstromes bei der Informationsübertragung völlig ausgeschlossen wird. Dies ist besonders dann von Vorteil, wenn zur Erzielung einer guten Übertragungsqualität bei einer kleinen Bauweise der Übertrager hochpermeable Kernmaterialien verwendet werden. Weiterbildungen der Erfindung und Ausführungsvarianten der erfindungsgemäßen Schaltungsanordnung ergeben sich aus den Unteransprüchen.

Ein Ausführungsbeispiel der Beschreibung wird nachfolgend anhand von Zeichnungen näher erläutert.

Es zeigt:
- Fig. 1: ein Blockschaltbild der gesamten Schaltungsanordnung,
- Fig. 2: das Schaltbild eines als Stromspiegelschaltung ausgebildeten Regelnetzwerkes,
- Fig. 3: das Schaltbild eines den Strom begrenzenden und halbierenden Regelnetzwerkes,
- Fig. 4: das Schaltbild eines vereinfachten, den Strom gleichmäßig aufteilenden Regelnetzwerkes.

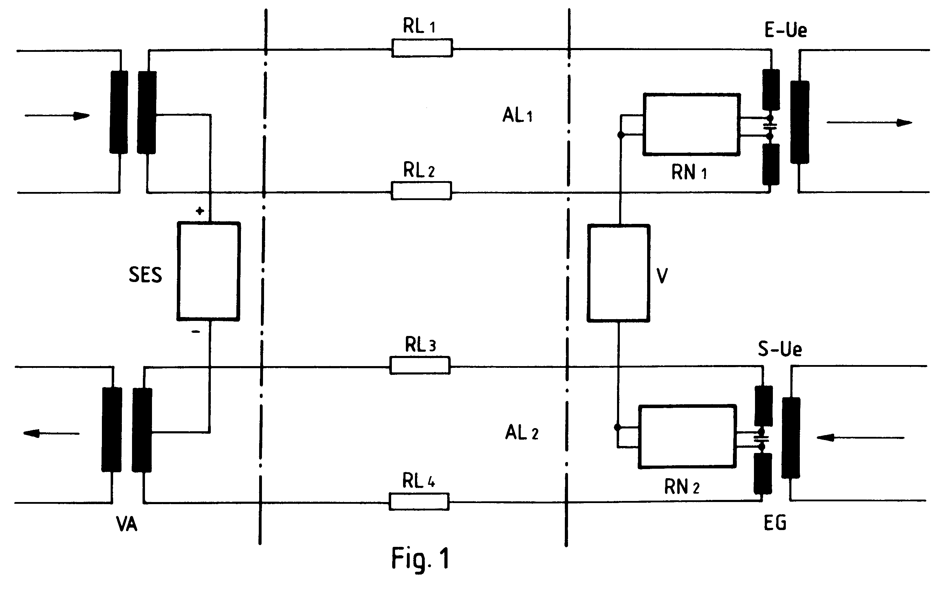

In der Fig. 1 ist ein Übersichtsschaltbild der gesamten Anordnung dargestellt, woraus ersichtlich ist, auf welche Weise von einer Vermittlungsanlage VA aus über eine Endgeräteschnittstelle EG die Stromversorgung eines Verbrauchers V erfolgt. Auf der Seite der Vermittlungsanlage VA ist eine Stromeinspeisung SES vorgesehen, wovon ein Pol + an die erste Anschlußleitung AL1 und der andere Pol - an die andere Anschlußleitung AL2 angeschlossen ist. Die Stromeinspeisung erfolgt dabei jeweils in den Mittelpunkten der leitungsseitigen Übertragerwicklungen, so daß sich die Stromflüsse weitgehend gegenseitig aufheben. Obwohl die Leitungswiderstände RL1 bis RL4 an sich keine großen Unterschiede aufweisen dürften, kann es dennoch vorkommen, daß in Folge unterschiedlicher Kontaktübergangswiderstände die auf den einzelnen Adern fließenden Ströme nicht vollkommen gleich sind.

Um die auf den einzelnen Adern fließenden Teilströme vollkommen gleich zu halten, sind auf der Seite der Endgeräte EG Regelnetzwerke RN1 und RN2 vorgesehen. Diese Regelnetzwerke RN1 und RN2 sind jeweils zwischen die Mittelpunkte der leitungsseitigen Wicklungen des Empfangsübertragers E-Ue bzw. des Sendeübertragers S-Ue und den Verbraucher V geschaltet.

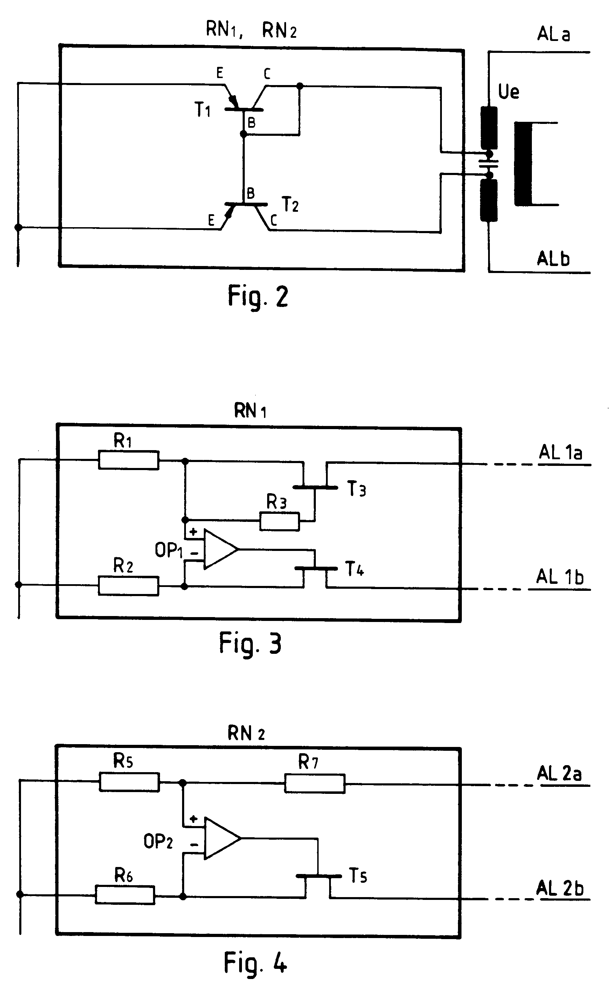

In der Fig. 2 ist in einem Stromlaufbahn dargestellt, wie die beiden gleichartig als Stromspiegelschaltung ausgebildeten Regelnetzwerke RN1 und RN2 beschaffen sein können. Dabei ist einer der Transistoren T1 durch Verbindung der Basis mit dem Kollektor als Diode geschaltet, wodurch ein definierter Spannungsabfall erzeugt wird. Daraufhin ergibt sich bei dem anderen Transistor T2 ein gleichgroßer Spannungsabfall, so daß durch gegenseitige Beeinflussung die beiden auf den Anschlußadern ALa und ALb fließenden Teilströme vollkommen gleich sind.

Das in der Fig. 3 dargestellte Regelnetzwerk RN1 ist mit seinen gleichgroßen Widerständen R1 und R2, sowie mit einem Operationsverstärker OP1 und dem Widerstand R3 so dimensioniert, daß durch den Transistor T3 auf der Anschlußader AL1a die Hälfte des maximal zulässigen Stromes fließen kann. Durch das sich daraufhin am Widerstand R1 einstellende Potential wird der Operationsverstärker OP1 veranlaßt, für den anderen Transistor T4 ein Steuerkriterium zur Verfügung zu stellen, welches bewirkt, daß auf der anderen Anschlußader AL1b ebenfalls die Hälfte des maximal zulässigen Stromes fließen kann. Mit dieser Variante des Regelnetzwerkes RN1 kann also erreicht werden, daß der über eine Anschlußleitung zu übertragene Versorgungsstrom auf einen Maximalwert begrenzt werden kann, um ggf. einer bestehenden Vorschrift zu entsprechen. Dieser Versorgungsstrom wird dann, wie bereits beschrieben worden ist, in zwei gleichgroße Teilströme aufgeteilt, welche über die einzelnen Anschlußadern AL1a und AL1b fließen. Wenn in der einen Anschlußleitung AL1 ein Regelmetzwerk RN1 eingeschleift ist, welches in seiner inneren Struktur nach Fig. 3 aufgebaut ist, so wird ein etwas vereinfachtes Regelnetzwerk RN2 in die andere Anschlußleitung AL2 eingeschleift, sowie es in Fig. 4 dargestellt ist. Hier ist ein Operationsverstärker OP2 eingesetzt, der eine Spannung an einem Spannungsteiler, bestehend aus den Widerständen R5 und R7 abgreift und daraus ein Steuersignal für einen Transistor T5 erzeugt. Dieser Transistor T5 wird in seinem Durchlaßverhalten so geregelt, daß auf der Anschlußader AL2b genau der gleiche Teilstrom fließt wie auf der anderen Anschlußleitung AL2a. Damit ist auch dann gewährleistet, daß auf den einzelnen Anschlußadern gleiche Teilströme fließen, wenn eine Begrenzung des Maximalstromes verlangt wird.

## Patentansprüche

1. Schaltungsanordnung für die Stromversorgung von Endgeräten über Anschlußleitungen mit digitaler Informationsübertragung, wobei die Stromversorgung und die Verbraucher jeweils an den Mittelabgriffen von die Anschlußleitungen abschließenden Übertragern angeschlossen sind, wobei der eine Pol der Stromeinspeisung mit der ersten Anschlußleitung und der andere Pol mit der anderen Anschlußleitung verbunden ist,
**dadurch gekennzeichnet**,
daß auf der Endgeräteseite jeweils am Mittelpunkt der leitungsseitigen Wicklungen eines einer Anschlußleitung (AL1, AL2) zugeordneten Empfangssübertragers (E-Ue) bzw. Sendeübertragers (S-Ue) ein Regelnetzwerk (RN1, RN2) in Reihenschaltung mit einem Verbraucher (V) angeschlossen ist, welches die Stärke der auf den einzelnen Adern (ALa, ALb) jeweils einer Anschlußleitung (AL1, AL2) fließenden Teilströme auf genau gleiche Werte einstellt.

2. Schaltungsanordnung nach Anspruch 1,
dadurch gekennzeichnet,
daß die Regelnetzwerke (RN1, RN2) jeweils aus gleichartig ausgebildeten Stromspiegelschaltungen bestehen, wobei zwei gleichartige Transistoren (T1, T2) eingesetzt werden, von denen einer (T1) als Diode geschaltet ist.

3. Schaltungsanordnung nach Anspruch 1,
dadurch gekennzeichnet,
daß in einer Anschlußleitung (z. B. AL1) ein Regelnetzwerk (z. B. RN1) angeordnet ist, das einen Operationsverstärker (OP1) und zwei Transistoren (T3, T4) enthält, womit ein zulässiger Maximalstrom jeweils zur Hälfte auf die einzelnen Adern (z. B. AL1a und AL1b) aufgeteilt wird, und daß in der anderen Anschlußleitung (AL2) ein einfacheres Regelnetzwerk (RN2) angeordnet ist, welches nur einen Regeltransistor (T5) enthält, der von einem Operationsverstärker (OP2) gesteuert wird, um die auf den einzelnen Adern (AL2a und AL2b) fließenden Teilströme gleich zu halten.

## Claims

1. Circuit arrangement for the current supply of terminal apparatus by way of subscriber lines with digital data transmission, wherein the current supply and the consumer are each connected to the centre taps of transformers terminating the subscriber lines, wherein one pole of the current feed is connected with the first subscriber line and the other pole with the other subscriber line, characterised thereby that at the terminal apparatus end a respective regulating network (RN1, RN2) in series with a consumer (V) is connected to the centre point of the windings, which are at the line side, of each of a receiving transformer (E-Ue) and a transmitting transformer (S-Ue) each associated with a subscriber line (AL1, AL2) and adjusts the strength of the partial currents, which are flowing on the individual wires (ALa, ALb) of a respective subscriber line (AL1, AL2), to exactly equal values.

2. Circuit arrangement according to claim 1, characterised thereby that the regulating networks (RN1, RN2) each consist of similarly constructed current mirror circuits, wherein two similar transistors (T1, T2) are used, of which one (T1) is wired as a diode.

3. Circuit arrangement according to claim 1, characterised thereby that arranged in one subscriber line (for example, AL1) is a regulating network (for example, RN1), which comprises an operational amplifier (OP1) and two transistors (T3, T4), whereby a permitted maximum current is distributed half to each of the individual wires (for example, AL1a, AL1b), and that arranged in the other subscriber line (AL2) is a simpler regulating network (RN2), which comprises only one regulating transistor (T5), which is controlled by an operational amplifier (OP2) in order to the partial currents flowing on the individual wires (AL2a and AL2b) equal.

## Revendications

1. Circuit d'alimentation de terminaux par des lignes de connexion pour la transmission numérique d'informations, dans lequel l'alimentation et les consommateurs sont raccordés respectivement aux prises médianes de transformateurs terminant les lignes de connexion, dans lequel l'un des pôles de l'alimentation est relié à la première ligne de connexion et l'autre pôle à l'autre ligne de connexion,
caractérisé en ce que,
sur le côté des terminaux, respectivement au centre des enroulements côté ligne d'un transformateur de réception (E-Ue), respectivement d'un transformateur d'émission (S-Ue), associé à une ligne de connexion (AL1, AL2), un réseau de réglage (RN1, RN2) branché en série avec un consommateur (V) est raccordé, qui règle sur exactement une même valeur l'intensité des courants partiels circulant dans les conducteurs individuels (ALa, ALb), respectivement dans une ligne de connexion (AL1, AL2).

2. Circuit selon la revendication 1,
caractérisé en ce que,
les réseaux de réglage (RN1, RN2) comprennent respectivement des circuits ayant une symétrie de courants, formés de manière semblable, dans lesquels deux transistors semblables (T1, T2) sont utilisés, dont l'un (T1) fonctionne comme une diode.

3. Circuit selon la revendication 1,
caractérisé en ce que,
dans une ligne de connexion (par exemple AL1) est agencé un réseau de réglage (par exemple RN1) qui contient un amplificateur opérationnel (OP1) et deux transistors (T3, T4), avec lequel un courant maximum admissible est réparti respectivement par moitié dans les conducteurs individuels (par exemple AL1a et AL1b), et en ce que dans l'autre ligne de connexion (AL2) est agencé un réseau de réglage simple (RN2), qui contient seulement un transistor de réglage (T5), qui est commandé par un amplificateur opérationnel (OP2), afin de maintenir égaux les courants partiels circulant dans les conducteurs individuels (AL2a et AL2b).
